# EUROPEAN PATENT SPECIFICATION

(11) **EP 2 477 255 B1**
(45) Date of publication and mention of the grant of the patent: **26.02.2020**
(21) Application number: 09849157.4
(22) Date of filing: 10.09.2009
(51) Int. Cl.: H01M 2/18, H01M 4/13, H01M 10/04, H01M 2/16, H01M 10/052, H01M 10/0583, H01M 2/34

(54) **STACKED BATTERY AND METHOD FOR MANUFACTURING SAME**
BATTERIESTAPEL UND VERFAHREN ZU SEINER HERSTELLUNG
BATTERIE EMPILÉE ET SON PROCÉDÉ DE FABRICATION

(43) Date of publication of application: 18.07.2012
(73) Proprietor: Envision AESC Energy Devices Ltd., Sagamihara-shi, Kanagawa (JP); NEC Corporation, Tokyo 108-8001 (JP)
(72) Inventor: YAGETA, Hiroshi, Sagamihara-shi Kanagawa 252-5298 (JP); KUMEUCHI, Tomokazu, Sagamihara-shi Kanagawa 252-5298 (JP); DAIDOJI, Takao, Sagamihara-shi Kanagawa 252-5298 (JP)
(74) Representative: Vossius & Partner Patentanwälte Rechtsanwälte mbB
(86) International application number: PCT/JP2009/004475
(87) International publication number: WO 2011/030377

(56) References cited:
- JP-A- 2001 291 647
- JP-A- 2007 115 876
- JP-A- 2008 130 360
- JP-A- 2009 009 919
- JP-A- 2009 093 812
- JP-A- 2009 093 812
- JP-U- S59 117 064
- US-A- 5 580 676
- US-A1- 2009 029 259

## Description

### Technical Field

The present invention relates to a battery sealed with a film casing material, and to a stacked battery in which an opening of a battery element, which is made by laminating a predetermined number of tabular positive and negative electrodes along with separators, is sealed with a film casing material.

### Background Art

For a portable phone and other portable devices that use batteries, a lithium ion battery having a large charge and discharge capacity and the likes are widely used. Moreover, for use in an electric vehicle, electric bicycle, electric tool, electric power storage and the like, what is required is a secondary battery that has a large charge and discharge capacity and is highly efficient.

For such a high-power battery, in order to increase energy density per volume or mass of the battery, as a casing container of the battery, the use of a film casing material that can be made thinner, instead of a ferrous material or a material made of aluminum, is effective.

What is used for the film casing material is a laminated film, which is made by putting together and laminating the following materials: a film that has corrosion resistance against electrolytic solution and is excellent in thermal adhesiveness, such as a polypropylene film or polyethylene film; metallic foil, such as aluminum foil, which can keep an electrolytic solution, liquid and gas from passing therethrough; and a strong protective film, such as nylon or polypropylene.

In a stacked lithium ion battery covered with the film casing material, after the periphery of the stacked lithium ion battery is heat-sealed with the film casing material except for an opening, into which an electrolytic solution is poured, and the like, the gas inside is drained out to reduce pressure before the opening is heat-sealed.

When the opening is sealed after the pressure is reduced, the positive and negative electrodes adhere closely to each other via separators as the film casing material is pushed by the battery element because of atmospheric pressure. That is, the film casing material is pushed by the battery element with a strong force of 0 .1 MPa because of atmospheric pressure. As a result, the positive electrodes, the separators and the negative electrodes adhere closely to each other. However, depending on a friction coefficient between layers of the positive and negative electrodes and separators and how a gas is generated inside the battery, the pushing force of the atmospheric pressure may not work effectively.

Moreover, in a stacked battery, such as a stacked lithium ion battery, the external shape of a negative electrode is larger than that of a positive electrode, and the negative electrode that is large in area is used. A projection portion of a positive electrode onto a negative electrode is disposed so that the entire projection portion exists on a surface of the negative electrode. However, as the positive and negative electrodes move away from original positions, the relative positional relationship between the positive and negative electrodes becomes distorted, possibly leading to a decrease in battery performance and other problems.

In order to maintain the positional relationship between the positive and negative electrodes, what is proposed is a stacked battery whose shape makes it difficult for the positive and negative electrodes to move away from original positions because the positive and negative electrodes are both covered with separators in such a way that the external shapes of the positive and negative electrodes are equal in size (See Patent Document 1, for example) .

However, two separators are disposed between the positive and negative electrodes. As a result, the problem is that the distance between the electrodes increases, and that the electric resistance between the electrodes increases.

Moreover, what is proposed is a stacked battery that keeps a group of electrodes from moving away from original positions because the group of electrodes is fixed after a plurality of separators is bonded together in a portion of a peripheral section of the positive and negative electrodes or in the entire peripheral section of the positive and negative electrodes (See Patent Document 2, for example).

However, in a battery that has a large number of positive and negative electrodes laminated and a large charge and discharge capacity, a welding portion of a separator needs to significantly stick out. As a result, the problem is that a space emerges between a battery element and a casing material, resulting in a decrease in volume efficiency.

### Citation Lists

### Patent Documents

Patent Document 1: JP-A-2000-315489
Patent Document 1: JP-A-10-64506

Further prior art batteries are taught e.g. in US 5 580 676 A, JP 2001 291647 A, JP 2007 115876 A, JP 2009 093812 A, JP 2009 009919 A, JP 2008 130360 A, US 2009/029259 A1, or JP S59 117064 U.

### Disclosure of the Invention

### Problems to be Solved by the Invention

An object of the present invention is to solve the following problem: In a stacked battery such as a stacked lithium ion battery that is made by sealing an opening of a battery element, in which positive and negative electrodes that are different in area are laminated with separators therebetween, with a film casing material, a decrease in battery performance occurs as a negative electrode moves away from original position inside the battery and a portion that does not face a negative electrode emerges on a positive electrode. In particular, the following problem is solved: a decrease in battery performance occurs even when the battery is subjected to excessive shocks and vibrations. Another object of the present invention is to solve the above problems without causing an increase in the number of members used and a decrease in volume efficiency. Moreover, as for a process of assembling a battery element, the object of the present invention is to provide a stacked battery that enables the positions of both positive and negative electrodes to be determined with high accuracy.

### Means for Solving the Problems

The present invention is defined in the present independent claims 1 or 6. According to the present invention, a stacked battery includes: a square battery element in which a tabular positive electrode, a separator and a tabular negative electrode are laminated, wherein: one side of the battery element is a terminal connection section pulled-out surface, which is provided on both the positive and negative electrodes and where a plate-like positive-electrode terminal connection section and a plate-like negative-electrode terminal connection section are both pulled out; projection surfaces, which are generated by vertically projecting the positive-electrode terminal connection section and the negative-electrode terminal connection section onto surfaces extending from the positive and negative electrodes, do not cross each other; a surface of the positive electrode and a surface of the negative electrode, which are facing each other , are different in area; each electrode is disposed so that an entire projection portion, which is generated by projecting the small-area electrode onto a surface of a large-area electrode that faces the small-area electrode, is positioned on the large-area electrode; on a separator, a bumping section is provided to limit movements of the positive and negative electrodes as a positive-electrode end surface and a negative-electrode end surface hit the bumping section; the bumping section is made up of a crease or joining section of adjacent separators among separators disposed on electrode surfaces; and all separators laminated on electrode surfaces are bonded together with the creases or joining sections.

Moreover, in the stacked battery, the small-area electrode is covered with a bag-shaped separator, the bumping section is made up of the joining section of adjacent bag-shaped separators, and the position of the small-area electrode is determined by the bumping section.

In the stacked battery, a bumping section that limits movements of the large-area electrode is a crease of a separator, and a bumping section that limits movements of a small-area electrode is a joining section of a separator.

In the stacked battery, the small-area electrode is surrounded by a joining section of separators of two sides that are adjacent to a side positioned on the terminal connection section pulled-out surface.

Moreover, in the stacked battery, a separator is made up of a zigzag-pattern member whose crease of zigzag-pattern is positioned on the terminal connection section pulled-out surface, and has an opening, through which the positive-electrode terminal connection section or negative-electrode terminal connection section passes, on the crease.

In the stacked battery, a separator is made up of the zigzag-pattern member whose crease of zigzag-pattern is positioned on any surface other than the terminal connection section pulled-out surface, and with the help of a bumping section that is a join formed at a location perpendicular to the crease, the position of an electrode is determined.

In the stacked battery, a joining section of separators is made in the form of a continuous line, or intermittently, by means of welding, an adhesive agent or an adhesive tape.

In the stacked battery, a separator or electrode positioned in the outermost layer is joined to a fixing tape, which is positioned on the opposite side of a battery element from the terminal connection section pulled-out surface.

A method of producing the stacked battery includes: a step of disposing a tabular positive electrode, on which a plate-like positive-electrode terminal connection section is provided, and a tabular negative electrode, on which a plate-like negative-electrode terminal connection section is provided, in such a way that the positive-electrode terminal connection section and the negative-electrode terminal connection section face the same direction; a step of laminating the positive and negative electrodes on an electrode surface with a separator disposed in such a way that surfaces, which are generated by vertically projecting the positive-electrode terminal connection section and the negative-electrode terminal connection section onto surfaces extending from the positive and negative electrodes, do not cross each other; and a step of forming a bumping section that limits movements of at least a positive or negative electrode by heating at least the positive-electrode terminal connection section or negative-electrode terminal connection section and heat-sealing adjacent separators.

A method of producing a stacked battery includes: a step of storing in a bag-shaped separator an electrode that is small in area; a step of joining at least a portion of an opening of a bag-shaped separator except for a location where a plate-like electrode terminal connection section, to which a current collector is connected, is taken out; a step of alternately laminating small-area electrodes and large-area electrodes; and a step of heating a terminal connection section of a small-area electrode or a current-collector side of an electrode and heat-sealing a separator to form a bumping section that limits movements of an end surface of a large-area electrode.

### Advantages of the Invention

According to the present invention, on a separator, a means for determining the positions of positive and negative electrodes is provided. Moreover, all separators are joined together. Therefore, in a stacked battery such as a lithium ion battery, it is possible to prevent positive and negative electrodes from moving away from original positions even when excessive shocks or vibrations are applied in any direction, and to avoid a decline in battery performance. Moreover, it is possible to determine the positions with high accuracy even when the battery is produced. Therefore, the present invention is highly effective in producing the battery.

### Brief Description of the Drawings

FIGS. 1A to 1C are diagrams illustrating an example of a stacked battery of the present invention.
FIGS. 2A and 2B are partially enlarged views of battery elements.
FIGS. 3A to 3C are diagrams illustrating a stacked battery according to another embodiment of the present invention.
FIG. 4 is a diagram illustrating a method of producing a stacked battery according to one embodiment of the present invention.
FIG. 5 is a diagram illustrating a method of producing a stacked battery according to another embodiment of the present invention.
FIGS. 6A and 6B are diagrams illustrating a method of producing a stacked battery according to another embodiment.
FIG. 7 is a diagram illustrating a method of producing a stacked battery according to another embodiment

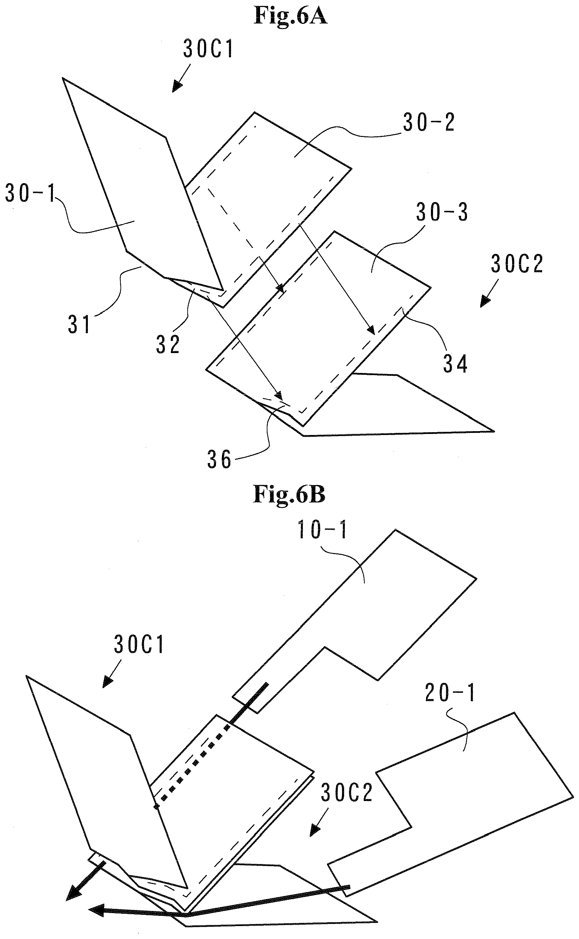

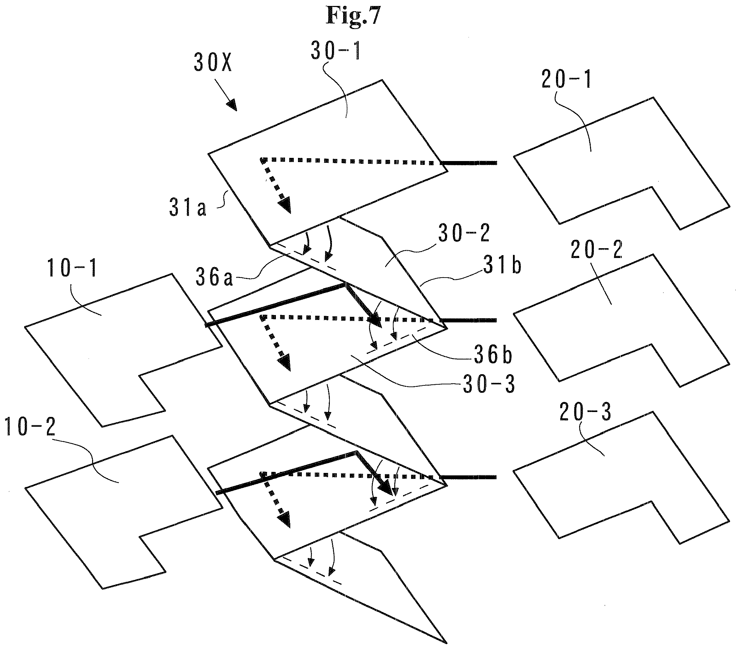

(In FIGS. 6A, 6B, resp. in FIG. 7, not all the bumping sections and/or the zigzag separator configuration as presently claimed are shown, however, these figures are useful for understanding some additional preferred details and/or the context of the present invention.)

### Best Mode for Carrying Out the Invention

The present invention is a solution to the following and other problems: In a stacked battery such as a stacked lithium ion battery is sealed with a film casing material, a decrease in battery performance occurs as positive and negative electrodes move away from original positions. Moreover, according to the present invention, it is found that it is possible to provide, without an increase in volume, a stacked battery that is excellent in volume efficiency without distorting the relative positional relationship between positive and negative electrodes by forming, on a separator between the positive and negative electrodes, a blockage section that limits the movements of the positive and negative electrodes.

Moreover, when a positive-electrode pulled-out terminal and a negative-electrode pulled-out terminal are taken out of a sealing section provided on the same side of a square stacked battery, there is the following characteristic if a large number of stacked batteries are connected in series and parallel: a high degree of freedom in arrangement of the stacked batteries.

However, between the positive-electrode pulled-out terminal and a film casing material that is positioned on the opposite side from a terminal connection section pulled-out surface from which the negative-electrode pulled-out terminal is taken out, a tiny space emerges because the film casing material adheres closely to a battery element because of atmospheric pressure on the film casing material. Meanwhile, in a space next to the film casing material of the terminal connection section pulled-out surface, a relatively large space is created to connect a positive-electrode terminal connection section and a negative-electrode terminal connection section between battery elements.

On the other hand, for both the positive-electrode terminal connection section and the negative-electrode terminal connection section, a thin piece of metallic foil is used. Therefore, it has been considered that the positive-electrode terminal connection section and the negative-electrode terminal connection section are easily deformed in any direction because of external force applied to a battery laminated body. However, after an examination into the deformation of the positive-electrode terminal connection section and the negative-electrode terminal connection section due to the force applied to the battery laminated body, what is found is the following characteristic: The positive-electrode terminal connection section and the negative-electrode terminal connection section are easily deformed by force applied in a compression direction, but rarely deformed by tensile force. A possible explanation to the above is that, while an electrode can move in a direction in which a terminal is pulled out as an electrode terminal connection section is deformed, the electrode rarely moves in the opposite direction because drag force is applied as the electrode terminal connection section causes tensile force.

Given the above facts, in a stacked battery in which a positive-electrode pulled-out terminal and negative-electrode pulled-out terminal of a square battery are both taken out from a terminal connection section pulled-out surface, shocks tend to cause electrodes to move away from original positions toward the terminal connection section pulled-out surface. Therefore, attention is paid to the fact that the electrodes generally tend to move away from original positions toward the terminal connection section pulled-out surface; first of all, a step is taken to prevent the electrodes from moving away from original positions toward the terminal connection section pulled-out surface.

The following describes the present invention with reference to the accompanying drawings.

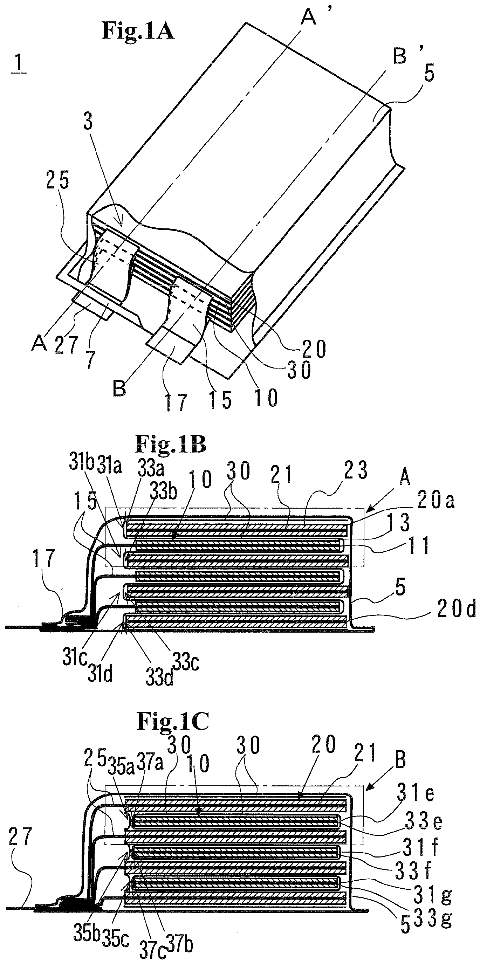

FIG. 1 is diagrams illustrating an example of a stacked battery of the present invention. FIG. 1A is a perspective view illustrating the stacked battery of the present invention with a portion cut away. FIG. 1B is a diagram illustrating cut surfaces of battery elements along line A-A' of FIG. 1A. FIG. 1C is a diagram illustrating cut surfaces of battery elements along line B-B' of FIG. 1A.

Incidentally, in order to make clear the relationships between laminated members, the scale of FIGS. 1B and 1C is different from that of FIG. 1A.

The description here of a stacked battery 1 uses a lithium ion battery as an example. In the stacked battery 1, battery elements 3 are sealed with a film casing material 5. Positive electrodes 10 and negative electrodes 20 of the battery elements 3 are laminated via separators 30. In the positive electrodes 10, positive-electrode active-material layers 13 are formed on positive current collectors 11 made of aluminum foil or the like. Moreover, in the negative electrodes 20 that are larger in area than the positive electrodes 10, negative-electrode active-material layers 23 are formed on negative current collectors 21 made of copper foil or the like.

What is provided on the positive current collectors 11 is a region where no positive-electrode active-material layer is formed. From the above region, strip-shaped positive-electrode terminal connection sections 15 are formed with the use of a method of punching or cutting or other methods. Moreover, the positive-electrode terminal connection sections 15 are connected to a positive-electrode pulled-out terminal 17. Similarly, what is provided on the negative current collectors 21 is a region where no negative-electrode active-material layer is formed. From the above region, strip-shaped negative-electrode terminal connection sections 25 are formed with the use of a method of punching or cutting or other methods. The negative-electrode terminal connection sections 25 are connected to a negative-electrode pulled-out terminal 27. Incidentally, other components may be prepared as positive- and negative-electrode terminal connection sections and attached to current collectors by means of welding or the like.

Moreover, the positive-electrode pulled-out terminal 17 and the negative-electrode pulled-out terminal 27 are each subjected to heat-sealing and other processes in a sealing section 7 of the film casing material 5 before being taken out. An electrolytic solution is poured into the inside and the pressure is reduced before a pouring opening is sealed.

End surfaces of the negative electrodes 20 hit bumping sections 33a to 33d, which are made up of creases 31a to 31d of the separators 30. Therefore, the movements of the negative electrodes 20 toward the negative-electrode pulled-out terminal are limited. End surfaces of the positive electrodes 10 hit bumping sections 37a to 37c, which are made up of joining sections 35a to 35c where facing surfaces of adjacent separators 30 are joined by heat-sealing. Therefore, the movements of the positive electrodes 10 toward the positive-electrode pulled-out terminal are limited.

Furthermore, as for the positive electrodes, end portions that are on the opposite side from a direction of the positive-electrode pulled-out terminal hit bumping sections 33e to 33g, which are made up of creases 31e to 31g of the separators. Therefore, the movements of the positive electrodes in a direction opposite to the direction of the positive-electrode pulled-out terminal are limited.

Incidentally, according to the present invention, the movements limited by the bumping sections literally means that even if a tabular electrode is about to move in a direction toward a bumping section, there is a portion that limits the movement as an end surface of the tubular electrode hits the portion, meaning that two separators, which are disposed on both sides of the tabular electrode, are joined together outside an electrode region thereof to form a crease, or that the two separators are joined together by heat-sealing or chemicals, or subjected to join, sewing, holding and other processes with the use of an adhesive tape, adhesive agent, thread, rivet, clip or the like, so strongly that the movement of the tabular electrode is limited.

The bumping sections are not limited to the sections that are seamlessly and linearly formed. The bumping sections may be made in the form of dots.

In the embodiment shown in FIGS. 1A to 1C, the end portions of the separators that are positioned outside the bumping sections 33a and 33d of the end portions of the negative electrodes 20a and 20d in the outermost layers of the battery elements are opened. Therefore, the effects of limiting in the bumping sections 33a and 33d are smaller than in other bumping sections.

However, the battery is sealed after the pressure inside the battery casing material is reduced. Therefore, a peripheral portion of the outermost-layer electrode, which is a peripheral portion of a negative electrode according to the present embodiment, is subjected to atmospheric pressure via the film casing material and is bent in a direction toward the inside of the battery. Accordingly, a curved portion of the periphery of the negative electrode blocks movements in a direction parallel to a laminating surface. It becomes more difficult for the outermost-layer negative electrode to move away from original position than for those placed in the inside. There is no problem even when the outermost-layer negative electrode is not kept by the bumping section.

Moreover, the following configuration is also possible: There is no separator placed on an outer surface of the outermost-layer negative electrode. In this case, in the end portion of the outermost-layer negative electrode, the bumping section made up of a crease of the separator does not exist. Even in this case, because of the above reasons, there is no problem because the outermost-layer negative electrode rarely moves away from original position.

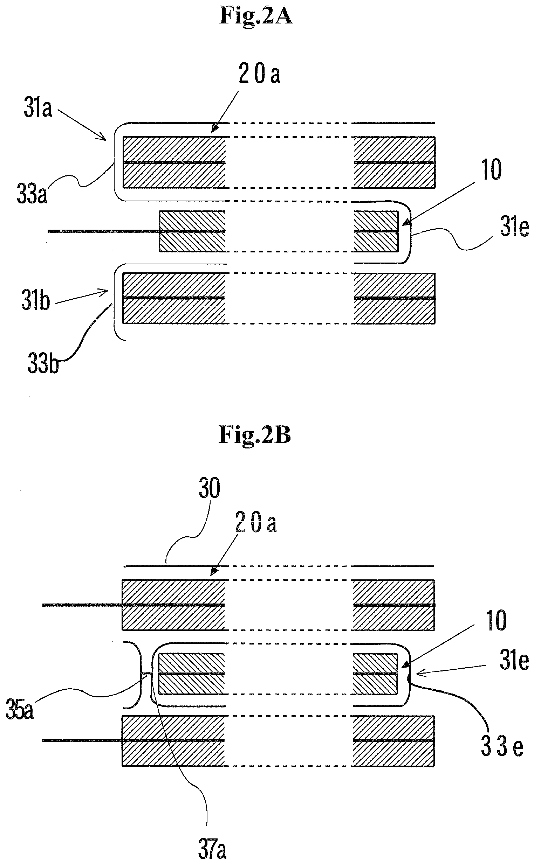

FIG. 2 is partially enlarged views of battery elements. FIG. 2A is a partially enlarged view of area A in FIG. 1B. FIG. 2B is a partially enlarged view of area B in FIG. 1C.

By the bumping sections 33a and 33b that are made up of creases 31a and 31b of the separators 30, the movement of a negative electrode 20a toward the negative-electrode pulled-out terminal is limited. By the bumping section 37a that is made up of a heat-sealing section 35a of a facing surface of an adjacent separator 30, the movement of a positive electrode 10 toward the positive-electrode pulled-out terminal is limited. It is preferred that an end surface of each electrode be in contact with a bumping section. However, there may be a gap so tiny that any problems with the position of the positive electrode relative to the negative electrode do not arise.

Moreover, in the positive electrode, on an end portion that exists in a direction opposite to the direction of the positive-electrode pulled-out terminal, the crease 31e of the separator forms the bumping section 33e. Therefore, the movements in the direction opposite to the direction of the positive-electrode pulled-out terminal are limited. The shape of cross-sectional surface of the separator shifts from the one shown in FIG. 2A to the one shown in FIG. 2B.

If all layers of separator are coupled in a zigzag pattern as in the above example, the positions of the positive and negative electrodes of all the layers are determined by creases of one separator and bumping sections, which are formed in joining sections that are positioned closer to the inside. As a result, the movements of the positive and negative electrodes are limited, and it is possible to improve the accuracy of determining the relative positions of the positive and negative electrodes of all the layers .

Moreover, as for a negative electrode that is large in area, a separator does not stick out from a crease that is used to determine a position; in the negative electrode, bumping sections are made up of creases on a terminal connection section pulled-out surface and a surface that is on the opposite side from the terminal connection section pulled-out surface. Therefore, the external shape of a battery element is substantially made equal in size to a negative-electrode end of a bumping section except for the terminal connection section. Accordingly, when compared with the case where separators are placed one by one, the volume becomes smaller. As a result, what is acquired is a battery that is large in volume energy efficiency.

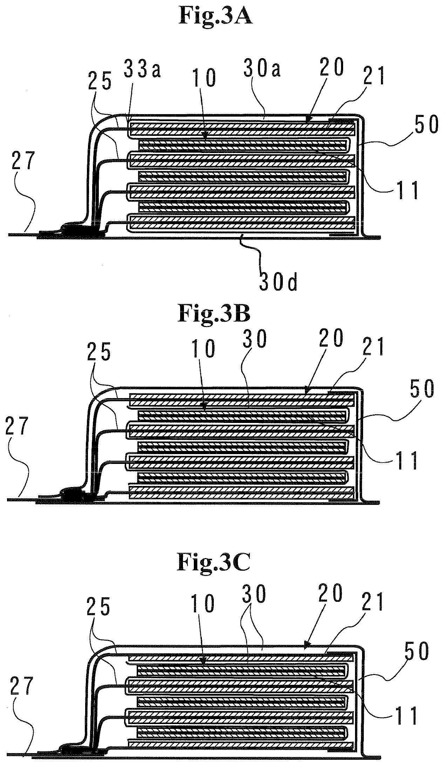

FIG. 3 is diagrams illustrating another embodiment of a stacked battery. FIGS. 3A, 3B and 3C are diagrams illustrating a cross-sectional surface of the same portion as that in FIG. 1B. In the stacked battery shown in FIG. 1B, in a separator that is positioned on an outer surface of a laminated body of battery elements, an end portion that is on the opposite side from the pulled-out terminals of positive and negative electrodes is not joined to other members.

Meanwhile, in a stacked battery shown in FIG. 3A, separators 30a and 30d positioned in the outermost layers are joined to a fixing tape 50 in an end portion that is on the opposite side from the negative-electrode pulled-out terminal. Accordingly, a blockage section 33a, which is positioned on an outer surface of the laminated body and made up of a crease of a separator around the negative-electrode pulled-out terminal, ensures that the movements of a negative electrode, which is positioned in the outermost layer of the laminated body of battery elements, are limited.

In a stacked battery shown in FIG. 3B, on an outer surface of a laminated body of battery elements, no separator is disposed. The end portions, which are on the opposite side from the negative-electrode pulled-out terminal, of the negative electrodes 20a and 20d positioned in the outermost layers are joined and fixed to a fixing tape 50 joining both surfaces.

The effects of the fixing tape further ensure that the movements of the outermost-layer negative electrodes of the laminated body are limited.

A stacked battery shown in FIG. 3C is different from that shown in FIG. 3B in that, in a negative electrode 20a of the outermost layer, a negative-electrode active-material layer 23 is formed only on one side of a current collector 21. The outermost-layer current collector 21 is joined and fixed to a fixing tape 50 joining both surfaces.

In that manner, in the stacked battery shown in FIG. 3C, as for the negative electrode on an outer surface, the negative-electrode active-material layer is formed only on one side. Therefore, when compared with the battery in which negative electrodes are formed on both surfaces, the stacked battery becomes slightly smaller in thickness and mass. On the other hand, a process of making a negative electrode with a negative-electrode active-material layer formed only on one side thereof is required. However, any of the above structures can be adopted.

Even in the battery shown in FIG. 3A, in which a separator exists in the outermost layer, as in that shown in FIG. 3C, the outermost-layer negative electrode may be the one in which a negative-electrode active-material layer is formed only on one side of a current collector.

Incidentally, the above description uses an example in which, as in a lithium ion battery, the stacked battery is a battery in which a negative electrode is larger in area than a positive electrode that faces the negative electrode. However, if the positive electrode is made larger in area than the negative electrode, in terms of preventing a laminated body is sealed with a flexible casing material from moving away from original position, it is preferred that the positive electrode be positioned in the outermost layer of the laminated body.

The following describes a method of producing the stacked battery of the present invention with reference to the accompanying drawings.

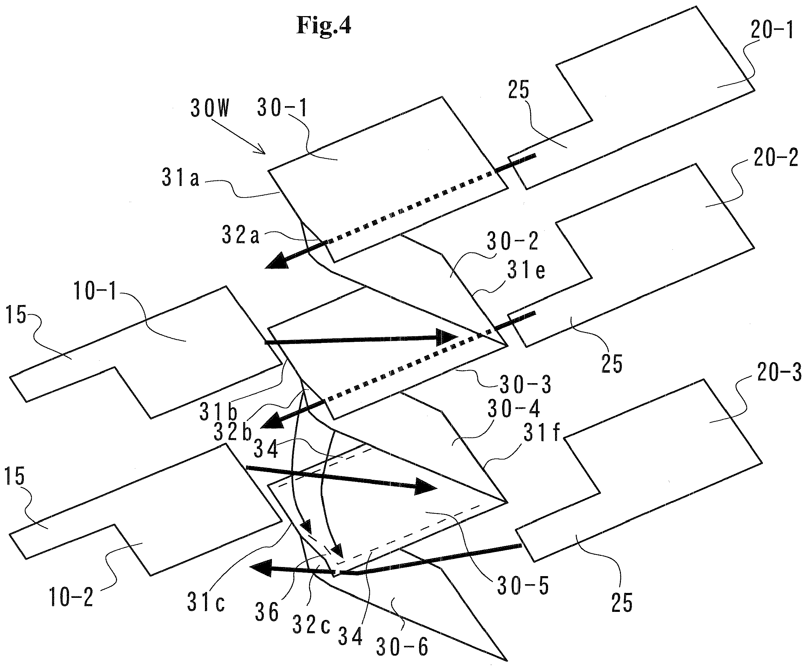

FIG. 4 is a diagram illustrating a method of producing the stacked battery according to one embodiment of the present invention. In a similar way to FIG. 1, a lithium ion battery is used as an example in the following description.

On a zigzag-pattern separator 30W, which is equal to or larger than the width of a negative electrode, creases 31a, 31b, 31c, 31e and 31f are formed with a length equivalent to the size of the negative electrode. On the creases 31a, 31b and 31c, openings 32a, 32b and 32c are formed. The length of the openings may be calculated by adding the width of a positive-electrode terminal connection section to the distance from a width-direction end portion of a separator to a heat-sealing section of a separator, which is formed in a length direction of a positive electrode.

Then, between separators 30-4 and 30-5, the position of a positive electrode 10-2 is determined at a crease 31f, and the positive electrode 10-2 is disposed at the center of the width direction. Then, after the separator 30-4 is placed on the separator 30-5, heat-sealing processes take place on a both-side-section heat-sealing section 34 and a positive-electrode upper-section heat-sealing section 36. The position of the positive electrode is determined by the separator before the positive electrode is fixed. The above heat-sealing processes are performed with the use of a heat-sealing means made of synthetic resin by means of an electric heater, ultrasonic wave, laser, high-frequency wave or the like. The heat-sealing sections are not limited to the sections that are formed seamlessly and linearly; the heat-sealing sections may be provided intermittently or in the form of dots.

Moreover, the position of each positive electrode is determined even in the width direction by the both-side-section heat-sealing section 34, resulting in the improved accuracy of determining the lateral-direction relative positions of positive and negative electrodes.

The above operations are similarly performed on a positive electrode 10-1; the positions of all positive electrodes are determined, and the positive electrodes are then fixed at predetermined positions of the separators. Then, a negative-electrode terminal connection section 15a of a negative electrode 20-1 passes through the opening 32a between the separators 30-1 and 30-2; the position of the negative electrode 20-1 is then determined on the crease 31a of the separator. Similarly, operations of placing negative electrodes 20-2 and 20-3 between separators 30-3 and 30-4 and between separators 30-5 and 30-6 are sequentially performed. As a result, a battery element is produced.

Moreover, a battery element can be produced in the following manner: after one positive electrode is sandwiched between adjacent separators of a zigzag-pattern separator and heat-sealed and one negative electrode is then stored, the storage and heat-sealing processes are performed sequentially on a positive and a negative electrode of each layer. Alternatively, the following method is also possible: After a both-side-section heat-sealing section 34 is produced in the width direction of a positive electrode on a zigzag-pattern separator by heat-sealing both left and right sides or one side, a positive and a negative electrode are disposed, and positive-electrode upper-section heat-sealing sections 36 are produced one by one or at one time.

Then, the obtained battery element is covered with a film casing material, and batteries are sealed except for an opening into which an electrolytic solution is poured. After an electrolytic solution is poured into the electrolytic-solution pouring opening, the battery is sealed with the pressure inside reduced. In this manner, a battery is produced.

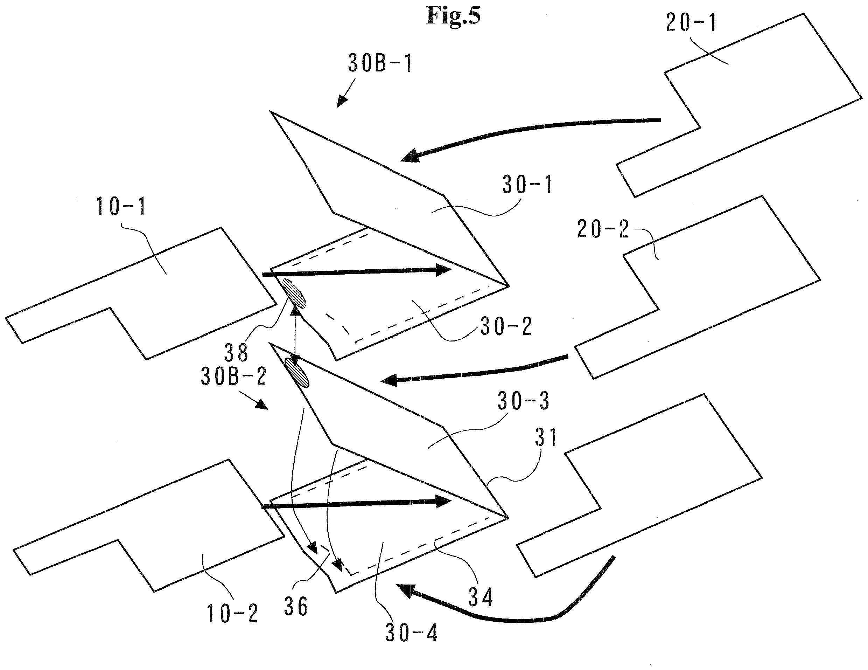

FIG. 5 is a diagram illustrating a method of producing the stacked battery according to another embodiment of the present invention.

With the use of a separator that is equal to or larger than the width of a negative electrode, separators 30B1 and 30B2 folded in half are produced so as to have enough length to cover a positive electrode in the form of a bag. Then, the position of a positive electrode 10-2 is determined at a crease 31 on the separator 30B2 folded in half. Moreover, the positive electrode is disposed at a central portion of the width direction of a separator; the position of the positive electrode is determined on a both-side-section heat-sealing section 34 and a positive-electrode upper-section heat-sealing section 36 before the positive electrode is fixed. The length of the positive-electrode upper-section heat-sealing section 36 may be equal to or smaller than a value calculated by subtracting a length, which is the sum of the width of a positive-electrode terminal connection section and the distance from a width-direction end portion of a separator to a heat-sealing section of a separator that is formed in a length direction of a positive electrode, from the width of a separator.

The above processes of forming the heat-sealing sections are performed with the use of a heat-sealing means made of synthetic resin by means of an electric heater, ultrasonic wave, laser, high-frequency wave or the like. The heat-sealing sections are not limited to the sections that are formed seamlessly and linearly; the heat-sealing sections may be provided intermittently or in the form of dots.

Then, on a separator 30-3 of the half-folded separator 30B1 that covers a positive electrode, a negative electrode 20-2 is placed. Furthermore, the half-folded separator 30B1 that does not cover a positive electrode is placed thereon. At a portion equivalent to a negative-electrode bumping portion 38 by which the position of a negative electrode is determined, a joining section of separators 30-2 and 30-3 are formed. The join process can be performed with the use of a joining means, such as heat-sealing, an adhesive agent, a one-sided adhesive tape, a two-sided adhesive tape, or the like. When two separators are bonded together with an adhesive tape put on the outer surfaces of the two separators laminated, as in the case where a bumping section is formed with the use of a bending portion, the external shape of a battery element can be made substantially equal in size to a negative-electrode end surface of the bumping section except for a terminal connection section.

Furthermore, on the half-folded separator 30B1, a positive electrode 10-1 is placed. In a similar way to the half-folded separator 30B2, separators 30-1 and 30-2 are heat-sealed to cover the positive electrode 10-1.

The above processes are repeated to produce a battery element. The obtained battery element is covered with a film casing material, and openings are sealed except for an opening into which an electrolytic solution is poured. After an electrolytic solution is poured and the pressure inside the battery is reduced, the pouring opening is sealed. In this manner, a stacked battery is obtained.

In the above description, for a bag-shaped separator in which a positive electrode is stored, one separator that is folded in half with a both-side-section heat-sealing section formed thereon is used. However, the following separator may also be used: a bag-shaped separator that is made by seamlessly or intermittently joining three sides of two separators, which can cover a positive electrode, except for an electrode terminal connection section.

Moreover, the following method is also possible: a method of forming all negative-electrode bumping sections 38 and all both-side-section heat-sealing sections 34 at both left and right sides or at one side, storing positive and negative electrodes, and then forming positive-electrode upper-section heat-sealing sections 36 one by one or at one time. According to the above method, the process of forming the positive-electrode upper-section sections 36 may come before the process of forming the negative-electrode bumping sections 38.

Moreover, as for the process of joining heat-sealing sections between adjacent separators, instead of a method of sequentially putting and joining separators closely together, the following method may be used to form heat-sealing sections across all layers at once: a method of producing a laminated body without forming a heat-sealing section; heating at least a positive-electrode terminal connection section, a negative-electrode terminal connection section, a positive electrode near the positive-electrode terminal connection section, or a negative electrode near the negative-electrode terminal connection section from the outsides of upper and lower surfaces of a stacked electrode terminal connection section or the outsides of upper and lower surfaces of a battery element by means of an electric heater, a ultrasonic wave applying means or the like; and then pushing a place, which corresponds to a location that should be heat-sealed, from the outsides of upper and lower surfaces of a battery element, or directly heating or hot-pressing a place, which corresponds to a location that should be heat-sealed, from the outsides of upper and lower surfaces of a battery element.

FIGS. 6A and 6B are diagrams illustrating a method of producing the stacked battery according to another embodiment.

As shown in FIG. 6A, negative-electrode covering separators 30C1 and 30C2 are produced to cover both surfaces of one negative electrode, which is made equal in size to or larger than the width of the negative electrode; an opening 32 is formed at a crease 31. The length of the opening can be made equal to the width of a negative-electrode terminal connection section.

A separator 30-2 of the negative-electrode covering separator 30C1 and a separator 30-3 of the negative-electrode covering separator 30C2 are combined closely together, and both are heat-sealed in a both-side-section heat-sealing section 34, by which the position of a positive electrode is determined, and in a positive-electrode upper-section heat-sealing section 36.

Then, as shown in FIG. 6B, on the negative-electrode covering separator 30C1, a negative electrode 20-1 is disposed. Between the two negative-electrode covering separators 30C1 and 30C2, a positive electrode 10-1 is disposed in a space made by heat-sealing. Similarly, what is formed on a separator 30-1 is a heat-sealing section to which another negative-electrode covering separator adheres closely to determine the position of a positive electrode.

The above operations are repeated until the number of positive and negative electrodes reaches a predetermined level. The processes of joining negative-electrode covering separators and disposing positive and negative electrodes are repeatedly performed so that a battery element is produced. The obtained battery element is covered with a film casing material, and batteries are sealed except for an opening into which an electrolytic solution is poured. After an electrolytic solution is poured and the pressure inside the battery is reduced, the pouring opening is sealed. In this manner, a stacked battery is obtained.

Moreover, after the locations where separators should be joined are all joined by heat-sealing and an integrated separator is formed, positive and negative electrodes may be inserted into predetermined locations of the separator. In this case, the following operations can be performed separately: an operation of joining separators by means of heat-sealing, and an operation of inserting positive or negative electrodes into predetermined locations. Therefore, the production processes become more flexible. It is also possible to simultaneously insert a plurality of positive or negative electrodes.

FIG. 7 is a diagram illustrating a method of producing the stacked battery according to another embodiment.

On the zigzag-pattern separator shown in FIG. 4, an opening, through which a negative-electrode terminal connection section passes, is provided at a crease; as for a positive electrode, heat-sealing sections are formed in the width and height directions, and a blockage section for determining the position of the positive electrode is provided so that the position of the positive electrode is determined. Meanwhile, in a zigzag-pattern separator illustrated in FIG. 7, as for both positive and negative electrodes, a blockage section, which is made up of a heat-sealing section extending in a direction perpendicular to a crease of the separator, is used in determining the positions of the positive and negative electrodes.

That is, in a zigzag-pattern separator 30X, a crease 31a is used in making adjacent separators 30-1 and 30-2. Then, what is formed is a heat-sealing section 36a, which extends in a direction perpendicular to a crease 31a to determine the position of a negative electrode in the direction of an electrode terminal connection section. Then, similarly, adjacent separators 30-2 and 30-3 are formed with the use of a crease 31b. An operation of forming the following section is performed: a heat-sealing section 36b, which extends in a direction perpendicular to a crease 31b to determine the position of a positive electrode in the direction of a positive-electrode terminal connection section along with the crease 31b. Then, positive electrodes 10-1 and 10-2 and negative electrodes 20-1 and 20-2 are disposed at predetermined locations of the zigzag-pattern separator. In this manner, a battery element is produced.

According to the above method, in a direction in which an electrode terminal is pulled out, it is possible to adjust the positions of heat-sealing sections 36a and 36b in such a way that the positions are different at positive-electrode and negative-electrode sides. However, at a location of a direction perpendicular to the above, the positions are determined by creases.

Therefore, as for the movements not only in the direction in which an electrode is pulled out but also in a direction perpendicular to the above, the positions are determined by creases, and the movements are limited by the creases.

Moreover, as in a lithium ion battery, in order to increase the area of a negative electrode facing a positive electrode, it is preferred that the length of a separator in a direction perpendicular to the direction in which an electrode terminal is pulled out be the sum of the length of the positive electrode and one-half of the difference in length between the negative and positive electrodes.

In this case, one-half of the difference in length between the negative and positive electrodes sticks out from an end surface of a separator. However, the structure described above does not have an adverse effect on battery performance because contacts with a positive electrode or other troubles do not occur.

Moreover, even in this case, as in the example shown in FIG. 6, after all locations of separators that should be joined are joined by heat-sealing and turned into an integrated separator, positive and negative electrodes may be inserted into predetermined locations of the separator. In this case, an operation of joining separators by means of heat-sealing and an operation of inserting positive or negative electrodes into predetermined locations can be performed separately. Therefore, the production processes become more flexible. It is also possible to simultaneously insert a plurality of positive or negative electrodes.

Openings of the battery elements produced as described above are sealed with a film casing material in a similar way to the other embodiments. Therefore, the battery elements are turned into a stacked battery.

### Industrial Applicability

In a stacked battery of the present invention, with the use of creases of a separator of the stacked battery, heat-sealing or the like, bumping sections are so formed as to limit the movements of electrode end surfaces. As a result, it is possible to accurately determine the positions of both positive and negative electrodes. Thus, it is easy to find positions during the production of a battery. Moreover, even when the battery is subjected to excessive shocks and vibrations, it is possible to prevent the position of a positive electrode from shifting relative to the position of a negative electrode and avoid a decline in battery performance. Therefore, it is possible to provide a battery that is excellent in performance.

### Explanation of Reference Symbols

1: Stacked battery
3: Battery element
5: Film casing material
10, 10-1, 10-2: Positive electrode
20, 20-1, 20-2, 20a, 20d: Negative electrode
11: Positive current collector
13: Positive-electrode active-material layer
21: Negative current collector
23: Negative-electrode active-material layer
15: Positive-electrode terminal connection section
17: Positive-electrode pulled-out terminal
25: Negative-electrode terminal connection section
27: Negative-electrode pulled-out terminal
7: Sealing section
30, 30-1,..., 30-6, 30a, 30d: Separator
30B1, 30B2: Half-folded separator
30C1, 30C: Negative-electrode covering separator
30W, 30X: Zigzag-pattern separator
31a, ..., 31d, 31e, ..., 31g: Crease
33a, ..., 33d, 33e, ..., 33g: Bumping sections
34: Both-side-section heat-sealing section
35a, ..., 35c: heat-sealing section
36: Positive-electrode upper-section heat-sealing section
37a, ..., 37c: Bumping section
50: Fixing tape

## Claims

1. A stacked battery comprising:
(a) a square battery element (3) in which a tabular positive electrode (10), a separator (30) and a tabular negative electrode (20) are laminated, wherein one side of the battery element is a terminal connection section pulled-out surface, which is provided on both the positive and negative electrodes and wherein a plate-like positive-electrode terminal connection section (15) and a plate-like negative-electrode terminal connection section (25) are both pulled out;
(b) projection surfaces, which are generated by vertically projecting the positive-electrode terminal connection section (15) and the negative electrode terminal connection section (25) onto surfaces extending from positive and negative electrodes, do not cross each other;
(c) a surface of the positive electrode (10) and a surface of the negative electrode (20), which are facing each other, are different in area;
(d) each electrode is disposed so that an entire projection portion, which is generated by projecting the small-area electrode onto a surface of a large-area electrode that faces the small-area electrode, is positioned on the large-area electrode; and
(e) a first bumping section (33a to 33d) is provided on a separator (30) to limit movements of negative electrodes (20) as a negative-electrode end surface hit the bumping section (33a to 33d);
(f) a second bumping section (37a to 37c) is provided on the separator (30) to limit movements of positive electrodes (10) as a positive-electrode end surface hit the bumping section (37a to 37c);
(g) a third bumping section (33e to 33g) is provided on the separator (30) to limit movements of the positive electrodes in a direction opposite to the direction in which the positive terminal connection section is pulled-out;
(h) the first bumping section (33a to 33d) is made up of a first crease (31a to 31d) of the separator (30), the second bumping section (37a to 37c) is made up of a joining section (35a to 35c) of the separator (30), and the third bumping section (33e to 33g) is made up of a second crease (31e to 31g) of the separator (30);
(i) wherein the separator (30) is made up of a zigzag-pattern member (30W) whose creases (31a to 31d; 31e to 31g) of zigzag-pattern are positioned on the terminal connection section pulled-out surface and a surface that is on the opposite side from the terminal connection section pulled-out surface;
(j) an opening (32a, 32b, and 32c) is formed on the first crease (31a to 31d) of the separator (30);
(k) the negative-electrode terminal connection section (25) is pulled out from the separator (30) through the opening;
(l) the positive electrode terminal connection section (15) and the negative electrode terminal connection section (25) are pulled out in the same direction;
and
(m) all separators (30) laminated on the electrode surfaces are bonded together with the creases (31a to 31d; 31e to 31g) or joining sections.

2. The stacked battery according to claim 1, **characterized in that** the small-area electrode is covered with a bag-shaped separator; the bumping section is made up of a joining section of adjacent bag-shaped separators; and the position of the small-area electrode is determined by the bumping section (37a to 37c).

3. The stacked battery according to claims 1 or 2, **characterized in that** the small-area electrode is surrounded by a joining section of separators of two sides that are adjacent to a side positioned on the terminal connection section pulled-out surface.

4. The stacked battery according to any one of claims 1 to 3, **characterized in that** a joining section of separators is made in the form of a continuous line, or intermittently, by means of welding, an adhesive agent or an adhesive tape.

5. The stacked battery according to any one of claims 1 to 4, **characterized in that** a separator or electrode positioned in the outermost layer is joined to a fixing tape, which is positioned on the opposite side of a battery element from the terminal connection section pulled-out surface.

6. A method of producing a stacked battery according to any one of claims 1 to 5, **characterized by** comprising:
(a) a step of disposing a tabular positive electrode, on which a plate-like positive-electrode terminal connection section is provided, and a tabular negative electrode, on which a plate-like negative-electrode terminal connection section is provided, in such a way that the positive-electrode terminal connection section and the negative-electrode terminal connection section face the same direction;
(b) a step of laminating the positive and negative electrodes on an electrode surface with a separator disposed in such a way that surfaces, which are generated by vertically projecting the positive-electrode terminal connection section and the negative-electrode terminal connection section onto surfaces extending from positive and negative electrodes, do not cross each other; and
(c) a step of forming a bumping section that limits movements of at least a positive or negative electrode by heating at least the positive-electrode terminal connection section or negative-electrode terminal connection section and heat-sealing adjacent separators.

7. A method according to claim 6, **characterized by** comprising:
(d) a step of storing in a bag-shaped separator an electrode that is small in area; a step of joining at least a portion of an opening of a bag-shaped separator except for a location where a plate-like electrode terminal connection section, to which a current collector is connected, is taken out;
(e) a step of alternately laminating small-area electrodes and large-area electrodes; and
(f) a step of heating a terminal connection section of a small-area electrode or a current-collector side of an electrode and heat-sealing a separator to form a bumping section that limits movements of an end surface of a large-area electrode.

## Patentansprüche

1. Stapelbatterie, die aufweist:
(a) ein Vierkant-Batterieelement (3) in dem eine tafelförmige Plusplatte (10), ein Separator (30) und eine tafelförmige Minusplatte (20) laminiert sind, wobei eine Seite des Batterieelements eine Klemmenverbindungsteilstück-Ausziehfläche ist, die sowohl auf den Plus- als auch auf den Minusplatten vorgesehen ist, und wobei ein plattenartiges Plusplatten-Klemmenverbindungsteilstück (15) und ein plattenartiges Minusplatten-Klemmenverbindungsteilstück (25) beide herausgezogen sind;
(b) Projektionsflächen, die durch vertikales Projizieren des Plusplatten-Klemmenverbindungsteilstücks (15) und des Minusplatten-Klemmenverbindungsteilstücks (25) auf Oberflächen erzeugt sind, die sich von Plus- und Minusplatten erstrecken, einander nicht kreuzen;
(c) eine Oberfläche der Plusplatte (10) und eine Oberfläche der Minusplatte (20), die zueinander weisen, sich in der Flächengröße unterscheiden;
(d) jede Platte so angeordnet ist, dass ein gesamter Projektionsabschnitt, der durch Projizieren der kleinflächigen Platte auf eine Oberfläche einer großflächigen Platte erzeugt ist, die zur kleinflächigen Platte weist, auf der großflächigen Platte positioniert ist; und
(e) ein erstes Prellteilstück (33a bis 33d) auf einem Separator (30) vorgesehen ist, um Bewegungen von Minusplatten (20) zu begrenzen, wenn eine Minusplatten-Endfläche auf das Prellteilstück (33a bis 33d) trifft;
(f) ein zweites Prellteilstück (37a bis 37c) auf dem Separator (30) vorgesehen ist, um Bewegungen von Plusplatten (10) zu begrenzen, wenn eine Plusplatten-Endfläche auf das Prellteilstück (37a bis 37c) trifft;
(g) ein drittes Prellteilstück (33e bis 33g) auf dem Separator (30) vorgesehen ist, um Bewegungen der Plusplatten in Gegenrichtung zu der Richtung zu begrenzen, in der das Plusplatten-Klemmenverbindungsteilstück herausgezogen ist;
(h) das erste Prellteilstück (33a bis 33d) aus einer ersten Falte (31 bis 31d) des Separators (30) aufgebaut ist, das zweite Prellteilstück (37a bis 37c) aus einem Verbindungsteilstück (35a bis 35c) des Separators (30) aufgebaut ist und das dritte Prellteilstück (33e bis 33g) aus einer zweiten Falte (31e bis 31g) des Separators (30) aufgebaut ist;
(i) wobei der Separator (30) aus einem zickzackmusterförmigen Bauteil (30W) aufgebaut ist, dessen Zickzackmusterfalten (31a bis 31d; 31e bis 31g) auf der Klemmenverbindungsteilstück-Ausziehfläche und einer Oberfläche positioniert sind, die auf der Gegenseite von der Klemmenverbindungsteilstück-Ausziehfläche liegt;
(j) eine Öffnung (32a, 32b und 32c) auf der ersten Falte (31 a bis 31d) des Separators (30) gebildet ist;
(k) das Minusplatten-Klemmenverbindungsteilstück (25) vom Separator (30) durch die Öffnung herausgezogen ist;
(l) das Plusplatten-Klemmenverbindungsteilstück (15) und das Minusplatten-Klemmenverbindungsteilstück (25) in der gleichen Richtung herausgezogen sind; und
(m) alle auf den Plattenoberflächen laminierten Separatoren (30) mit den Falten (31a bis 31d; 31e bis 31g) oder Verbindungsteilstücken verbunden sind.

2. Stapelbatterie nach Anspruch 1, **dadurch gekennzeichnet, dass** die kleinflächige Platte mit einem schlauchförmigen Separator abgedeckt ist; das Prellteilstück aus einem Verbindungsteilstück benachbarter schlauchförmiger Separatoren aufgebaut ist; und die Position der kleinflächigen Platte durch das Prellteilstück (37a bis 37c) bestimmt ist.

3. Stapelbatterie nach Anspruch 1 oder 2, **dadurch gekennzeichnet, dass** die kleinflächige Platte von einem Verbindungsteilstück von Separatoren zweier Seiten umgeben ist, die benachbart zu einer Seite sind, die auf der Klemmenverbindungsteilstück-Ausziehfläche positioniert ist.

4. Stapelbatterie nach einem der Ansprüche 1 bis 3, **dadurch gekennzeichnet, dass** ein Verbindungsteilstück von Separatoren in Form einer durchgängigen Linie oder intermittierend mit Hilfe von Schweißen, einem Kleber oder einem Klebeband hergestellt ist.

5. Stapelbatterie nach einem der Ansprüche 1 bis 4, **dadurch gekennzeichnet, dass** ein Separator oder eine Platte, der (die) in der äußersten Schicht positioniert ist, mit einem Fixierband verbunden ist, das auf der Gegenseite eines Batterieelements von der Klemmenverbindungsteilstück-Ausziehfläche positioniert ist.

6. Verfahren zur Herstellung einer Stapelbatterie nach einem der Ansprüche 1 bis 5, **dadurch gekennzeichnet, dass** es aufweist:
(a) einen Schritt des Anordnens einer tafelförmigen Plusplatte, auf der ein plattenartiges Plusplatten-Klemmenverbindungsteilstück vorgesehen ist, und einer tafelförmigen Minusplatte, auf der ein plattenartiges Minusplatten-Klemmenverbindungsteilstück vorgesehen ist, auf solche Weise, dass das Plusplatten-Klemmenverbindungsteilstück und das Minusplatten-Klemmenverbindungsteilstück in die gleiche Richtung weisen;
(b) einen Schritt des Laminierens der Plus- und Minusplatten auf einer Plattenoberfläche mit einem Separator, der so angeordnet ist, dass Oberflächen, die durch vertikales Projizieren des Plusplatten-Klemmenverbindungsteilstücks und des Minusplatten-Klemmenverbindungsteilstücks auf Oberflächen erzeugt sind, die sich von Plus- und Minusplatten erstrecken, einander nicht kreuzen; und
(c) einen Schritt des Bildens eines Prellteilstücks, das Bewegungen mindestens einer Plus- oder Minusplatte begrenzt, durch Erwärmen mindestens des Plusplatten-Klemmenverbindungsteilstücks oder Minusplatten-Klemmenverbindungsteilstücks und Heißsiegeln benachbarter Separatoren.

7. Verfahren nach Anspruch 6, **dadurch gekennzeichnet, dass** es aufweist:
(d) einen Schritt des in einem schlauchförmigen Separator erfolgenden Aufnehmens einer Platte, die kleinflächig ist; einen Schritt des Verbindens mindestens eines Abschnitts einer Öffnung eines schlauchförmigen Separators mit Ausnahme einer Stelle, an der ein plattenartiges Klemmenverbindungsteilstück, das mit einem Stromkollektor verbunden ist, herausgeführt ist;
(e) einen Schritt des abwechselnden Laminierens kleinflächiger Platten und großflächiger Platten; und
(f) einen Schritt des Erwärmens eines Klemmenverbindungsteilstücks einer kleinflächigen Platte oder einer Stromkollektorseite einer Platte und des Heißsiegelns eines Separators, um ein Prellteilstück zu bilden, das Bewegungen einer Endfläche einer großflächigen Platte begrenzt.

## Revendications

1. Batterie empilée comprenant :
(a) un élément de batterie carré (3) dans lequel une électrode positive tabulaire (10), un séparateur (30) et une électrode négative tabulaire (20) sont stratifiés, dans laquelle un côté de l'élément de batterie est une surface tirée vers l'extérieur de section de connexion de borne, qui est prévue sur les électrodes positive et négative et dans laquelle une section de connexion de borne d'électrode positive de type plaque (15) et une section de connexion de borne d'électrode négative de type plaque (25) sont toutes deux tirées vers l'extérieur ;
(b) des surfaces de projection, qui sont générées par une projection verticale de la section de connexion de borne d'électrode positive (15) et de la section de connexion de borne d'électrode négative (25) sur des surfaces s'étendant depuis les électrodes positive et négative, qui ne se croisent pas ;
(c) une surface de l'électrode positive (10) et une surface de l'électrode négative (20), qui se font face, diffèrent en termes d'aire ;
(d) chaque électrode est disposée de sorte qu'une portion de projection entière, qui est générée par projection de l'électrode de petite aire sur une surface d'une électrode de grande aire qui fait face à l'électrode de petite aire, soit positionnée sur l'électrode de grande aire; et
(e) une première section de bossage (33a à 33d) est prévue sur un séparateur (30) pour limiter les mouvements d'électrodes négatives (20) lorsqu'une surface d'extrémité d'électrode négative heurte la section de bossage (33a à 33d) ;
(f) une deuxième section de bossage (37a à 37c) est prévue sur le séparateur (30) pour limiter les mouvements d'électrodes positives (10) lorsqu'une surface d'extrémité d'électrode positive heurte la section de bossage (37a à 37c) ;
(g) une troisième section de bossage (33e à 33g) est prévue sur le séparateur (30) pour limiter les mouvements des électrodes positives dans une direction opposée à la direction dans laquelle la section de connexion de borne positive est tirée vers l'extérieur ;
(h) la première section de bossage (33a à 33d) est constituée d'une première cannelure (31a à 31d) du séparateur (30), la deuxième section de bossage (37a à 37c) est constituée d'une section de jonction (35a à 35c) du séparateur (30), et la troisième section de bossage (33e à 33g) est constituée d'une seconde cannelure (31e à 31g) du séparateur (30) ;
(i) dans laquelle le séparateur (30) est constitué d'un organe à motif en zigzag (30W) dont les cannelures (31a à 31d ; 31e à 31g) de motif en zigzag sont positionnées sur la surface tirée vers l'extérieur de section de connexion de borne et une surface qui est sur le côté opposé par rapport à la surface tirée vers l'extérieur de section de connexion de borne ;
(j) une ouverture (32a, 32b et 32c) est formée sur la première cannelure (31a à 31d) du séparateur (30) ;
(k) la section de connexion de borne d'électrode négative (25) est tirée vers l'extérieur depuis le séparateur (30) à travers l'ouverture ;
(l) la section de connexion de borne d'électrode positive (15) et la section de connexion de borne d'électrode négative (25) sont tirées vers l'extérieur dans la même direction ;
et
(m) tous les séparateurs (30) stratifiés sur les surfaces d'électrode sont liés ensemble avec les cannelures (31a à 31d ; 31e à 31g) ou les sections de jonction.

2. Batterie empilée selon la revendication 1, **caractérisée en ce que** l'électrode de petite aire est recouverte avec un séparateur en forme de poche ; la section de bossage est constituée d'une section de jonction de séparateurs en forme de poche adjacents ; et la position de l'électrode de petite aire est déterminée par la section de bossage (37a à 37c).

3. Batterie empilée selon les revendications 1 ou 2, **caractérisée en ce que** l'électrode de petite aire est entourée par une section de jonction de séparateurs de deux côtés qui sont adjacents à un côté positionné sur la surface tirée vers l'extérieur de section de connexion de borne.

4. Batterie empilée selon l'une quelconque des revendications 1 à 3, **caractérisée en ce qu'**une section de jonction de séparateurs est constituée sous la forme d'une ligne continue, ou par intermittence, au moyen d'un soudage, d'un agent adhésif ou d'un ruban adhésif.

5. Batterie empilée selon l'une quelconque des revendications 1 à 4, **caractérisée en ce qu'**un séparateur ou une électrode positionné dans la couche la plus externe est joint à un ruban de fixation, qui est positionné sur le côté opposé d'un élément de batterie par rapport à la surface tirée vers l'extérieur de section de connexion de borne.

6. Procédé de production d'une batterie empilée selon l'une quelconque des revendications 1 à 5, **caractérisé en ce qu'**il comprend :
(a) une étape consistant à disposer une électrode positive tabulaire, sur laquelle est prévue une section de connexion de borne d'électrode positive de type plaque, et une électrode négative tabulaire, sur laquelle est prévue une section de connexion de borne d'électrode négative de type plaque, de manière que la section de connexion de borne d'électrode positive et la section de connexion de borne d'électrode négative soient tournées dans la même direction ;
(b) une étape consistant à stratifier les électrodes positive et négative sur une surface d'électrode avec un séparateur disposé de manière que des surfaces, qui sont générées par une projection verticale de la section de connexion de borne d'électrode positive et de la section de connexion de borne d'électrode négative sur des surfaces s'étendant depuis les électrodes positive et négative, ne se croisent pas; et
(c) une étape consistant à former une section de bossage qui limite les mouvements d'au moins une électrode positive ou négative par chauffage d'au moins la section de connexion de borne d'électrode positive ou la section de connexion de borne d'électrode négative et par thermoscellage de séparateurs adjacents.

7. Procédé selon la revendication 6, **caractérisé en ce qu'**il comprend :
(d) une étape consistant à stocker dans un séparateur en forme de poche une électrode qui est de petite aire ; une étape consistant à joindre au moins une portion d'une ouverture d'un séparateur en forme de poche à l'exception d'un emplacement où est sortie une section de connexion de borne d'électrode de type plaque, à laquelle est connecté un collecteur de courant ;
(e) une étape consistant à stratifier en alternance des électrodes de petite aire et des électrodes de grande aire; et
(f) une étape consistant à chauffer une section de connexion de borne d'une électrode de petite aire ou un côté collecteur de courant d'une électrode et à thermosceller un séparateur pour former une section de bossage qui limite des mouvements d'une surface d'extrémité d'une électrode de grande aire.
